# EUROPÄISCHE PATENTSCHRIFT

(11) **EP 1 803 520 B1**
(45) Veröffentlichungstag und Bekanntmachung des Hinweises auf die Patenterteilung: **02.08.2017**
(21) Anmeldenummer: 06125748.1
(22) Anmeldetag: 08.12.2006
(51) Int. Cl.: B23K 1/00, B32B 15/01, F02F 1/38

(54) **Aus mindestens zwei vorgegossenen Abschnitten zusammengesetzter Zylinderkopf und Verfahren zu seiner Herstellung**
Cylinder head made out of at least two precast sections and method for its manufacture
Tête de cylindre constitué d'au moins deux parties coulées préalablement son procédé de fabrication

(30) Priorität: 09.12.2005 DE 102005059309
(43) Veröffentlichungstag der Anmeldung: 04.07.2007
(73) Patentinhaber: Nemak Linz GmbH, 4030 Linz (AT)
(72) Erfinder: Gosch, Rolf, Dr., 4600 Thalheim (AT); Sicking, Raimund, Dr., 53115 Bonn (DE); Janssen, Hartmut, Dr., 40721 Hilden (DE); Feikus, Franz Josef, Dr., 53123 Bonn (DE)
(74) Vertreter: Cohausz & Florack

(56) Entgegenhaltungen:
- DE-C1- 3 941 701
- DE-C1- 4 124 811
- GB-A- 554 236
- GB-A- 577 986
- GB-A- 1 014 291
- US-A- 3 593 406

## Beschreibung

Gießtechnische Verfahren eignen sich zur kostengünstigen Herstellung von Bauteilen in großen Stückzahlen, wie sie beispielsweise im Bereich des Baus von Verbrennungsmotoren von Kraftfahrzeugen benötigt werden. Durch konventionelles Vergießen einer metallischen Gusslegierung erzeugte Gussteile müssen dabei in der Praxis hinsichtlich ihrer Belastbarkeit immer höhere Anforderungen erfüllen. So sollen Gussteile nicht nur hohe mechanische Kräfte aufnehmen können, sondern auch thermisch hoch belastbar sein.

In der Vergangenheit konnten diese Anforderungen durch die Entwicklung von Legierungen erfüllt werden, die immer weiter verbesserte mechanische bzw. thermische Eigenschaften besaßen. Allerdings ist der gießtechnischen Verwendung solcher Legierungen häufig dadurch eine Grenze gesetzt, dass derartige Legierungen sich nur schlecht vergießen lassen und es daher vielfach nicht möglich ist, mit diesen Legierungen fein aufgegliederte, neben einer optimalen Funktion ein minimiertes Gewicht gewährleistende Gussteile in befriedigender Qualität zu erzeugen.

Ein besonders kritisches Beispiel für das Problem der gießtechnischen Herstellung von im praktischen Einsatz hoch belasteten Bauteilen sind aus Leichtmetalllegierungen gegossene Zylinderköpfe für Verbrennungsmotoren. Um bei solchen beispielsweise aus aluminiumbasierten Legierungen gefertigten Zylinderköpfen bei minimalen Emissionen einen optimalen Brennstoffverbrauch und eine optimale Energieausnutzung bei minimiertem Bauvolumen und Gewicht zu erreichen, sind diese Zylinderköpfe typischerweise komplex geformt und weisen aufwändig gestaltete Ein- und Auslasskanäle sowie filigran ausgebildete Ölversorgungs- und Kühlwasserleitungen auf. Gießtechnisch können derart komplex geformte Zylinderköpfe in hohen Stückzahlen auf wirtschaftliche Weise durch Verwendung von Gusslegierungen hergestellt werden, die eine gute Vergießbarkeit besitzen und dementsprechend in der Lage sind, die komplexen Formen des jeweiligen Gussteils exakt abzubilden.

Die insbesondere bei Dieselmotoren immer höher werdenden Verbrennungsdrücke und Betriebstemperaturen führen im praktischen Einsatz allerdings zu mechanischen und thermischen Belastungen, die von aus konventionellen, gut vergießbaren Leichtmetalllegierungen gegossenen Zylinderköpfen nicht mehr mit einer ausreichenden Sicherheit über die von ihnen geforderte Lebensdauer ertragen werden können. So haben Versuche ergeben, dass sich gut vergießbare AlSi-Legierungen zwar optimal zum Abgießen komplex geformter Zylinderköpfe oder vergleichbarer Bauteile eignen. Dem steht jedoch eine gegenüber den gestiegenen Anforderungen zu geringe Festigkeit besonders bei höheren Temperaturen der aus diesen Legierungen gegossenen Gussteile gegenüber. Der Versuch, die mechanische Belastbarkeit der Gussteile durch Verwendung von höherfesten AlCu-Legierungen zu verbessern, scheiterte an der schlechten Vergießbarkeit von Gusslegierungen dieses Typs.

Ausgehend von dem voranstehend erläuterten Stand der Technik bestand die Aufgabe der Erfindung darin, einen Zylinderkopf zu schaffen, der sich auf wirtschaftliche Weise durch Anwendung gießtechnischer Verfahren in großen Stückzahlen herstellen lässt und eine komplexe Formgebung sowie eine den sich in der Praxis stellenden Anforderungen gerecht werdende Belastbarkeit besitzt. Gleichzeitig sollte ein Verfahren angegeben werden, das die wirtschaftliche großtechnische Herstellung derartiger Zylinderköpfe ermöglicht.

In Bezug auf den Zylinderkopf ist diese Aufgabe erfindungsgemäß durch den Gegenstand des Anspruchs 1 gelöst worden.

In entsprechender Weise ist die voranstehend genannte Aufgabe in Bezug auf das Verfahren erfindungsgemäß durch die in Anspruch 9 angegebene Vorgehensweise gelöst worden.

Ein erfindungsgemäßer Zylinderkopf weist mindestens zwei Abschnitte auf, von denen der eine Abschnitt zumindest hinsichtlich entweder seiner thermischen oder seiner mechanischen Belastbarkeit, bevorzugt sowohl hinsichtlich seiner mechanischen als auch hinsichtlich seiner thermischen Belastbarkeit, dem anderen Abschnitt des Bauteils überlegen ist. Die beiden Abschnitte werden dazu in separaten Arbeitsgängen vorgefertigt und anschließend durch eine Zwischenschicht nach Art einer Lötverbindung fest und unlösbar miteinander verbunden. Bei der Durchführung des erfindungsgemäßen Verfahrens wird zu diesem Zweck auf eine Verbindungsfläche mindestens eines der Abschnitte eine Schicht aus dem für die Zwischenschicht des fertigen Bauteils ausgewählten metallischen Werkstoff aufgetragen. Nach dem Zusammenfügen und der anschließenden Wärmebehandlung bildet sich aus dieser Schicht dann die Zwischenschicht, über die die Abschnitte des Zylinderkopfs miteinander verbunden sind.

Die erfindungsgemäße Aufteilung des Zylinderkopfs in vorproduzierte Abschnitte mit unterschiedlichen Eigenschaften ermöglicht es dabei, die Abschnitte so zu gestalten und anzuordnen, dass ein Abschnitt, in dem besonders hohe Belastbarkeiten erforderlich sind, eine einfache Form erhält, die es ermöglicht, ihn aus hochfesten, jedoch schlechter vergießbaren Legierungen zu erzeugen, während der andere Abschnitt, in dem eine weniger hohe Belastbarkeit erforderlich ist, komplex geformt sein kann und aus einer eine gute Vergießbarkeit, jedoch eine geringere Belastbarkeit besitzenden Gusslegierung sicher abgebildet werden kann.

Die Zuteilung der jeweiligen Eigenschaften auf die betreffenden Abschnitte kann dabei in exakt definierter Weise erfolgen, da sowohl die gießtechnisch erfolgende Herstellung als auch alle anderen für die Einstellung der mechanischen und / oder thermischen Eigenschaften der einzelnen Abschnitte eines erfindungsgemäßen Zylinderkopfs erforderlichen Bearbeitungsschritte separat vorgenommen werden. Daher sind ein erfindungsgemäßer Zylinderkopf und die erfindungsgemäße Art und Weise seiner Herstellung solchen Verfahren überlegen, bei denen durch eine gezielte Abkühlung oder Erwärmung versucht wird, in einem einteilig fertig gegossenen Gussteil eine Gefügestruktur herzustellen, die in den unterschiedlichen Bereichen des Gussteils unterschiedliche mechanische oder thermische Eigenschaften hervorruft.

Die Aufgabe der bei einem erfindungsgemäßen Zylinderkopf vorhandenen Zwischenschicht besteht darin, wie ein Lotzusatzwerkstoff die einzelnen vorgefertigten Abschnitte stoffschlüssig so miteinander zu verbinden, dass sie unter den auch im praktischen Einsatz herrschenden Belastungen dauerhaft fest aneinander halten. Zu diesem Zweck werden die Dicke und Erstreckung der Zwischenschicht so ausgebildet, dass es im Bereich der Zwischenschicht zu keinen überhöhten Belastungssprüngen und damit einhergehenden hohen Spannungen kommt, die zu einem Aufbrechen des Zylinderkopfs im Bereich der Zwischenschicht selbst oder den Übergangsbereichen zwischen der Zwischenschicht und dem jeweils angrenzenden Abschnitt des Zylinderkopfs führen könnten. Lage, Verlauf und Ausbreitung der Zwischenschicht ergeben sich dabei durch die jeweilige Formgebung der einander zugeordneten, über die Zwischenschicht direkt miteinander verbundenen Fügeflächen der Abschnitte. In der Praxis reichen Schichtdicken von 50 - 100 µm aus, um beispielsweise bei aus mindestens zwei Abschnitten zusammengesetzten Zylinderköpfen, die im praktischen Einsatz dynamischen Belastungen unter erhöhten Temperaturen ausgesetzt sind, wie Zylinderköpfe von Verbrennungsmotoren, eine dauerhaft sichere Verbindung der Abschnitte sicherzustellen.

Sollen die erfindungsgemäßen Zylinderköpfe bei erhöhten Betriebstemperaturen eingesetzt werden, wie sie beispielsweise im Bereich eines Verbrennungsmotors auftreten, so sollte der Werkstoff der Zwischenschicht so gewählt werden, dass er bei einer Schmelztemperatur schmilzt, die höher als die Betriebstemperatur, für die der Zylinderkopf bestimmt ist, jedoch niedriger als die Schmelztemperatur der Werkstoffe ist, aus denen die beiden Abschnitte des Zylinderkopfes hergestellt sind.

Eine besonders gute Anbindung der Zwischenschicht an die vorgegossenen Abschnitte des erfindungsgemäßen Zylinderkopfs ergibt sich dann, wenn der Werkstoff der Zwischenschicht mit den Werkstoffen des ersten Abschnitts und des zweiten Abschnitts artverwandt ist. Unter "Artverwandtschaft" wird in diesem Zusammenhang verstanden, dass die Werkstoffe der Abschnitte des Zylinderkopfs und der Werkstoff der Zwischenschicht sich so ähnlich sind bzw. so aneinander angepasst sind, dass es im Zuge der erfindungsgemäß nach dem Fügen der einzelnen Abschnitte durchgeführten Erwärmung zur Ausbildung von Fügezonen kommt, in denen der Werkstoff der Zwischenschicht und der jeweilige Gusswerkstoff ineinander übergehen.

Besonders günstig wirkt sich die Erfindung bei der Herstellung von Leichtmetall-Zylinderköpfen aus. Indem die Gusswerkstoffe der vorproduzierten Abschnitte und der Werkstoff der Zwischenschicht der Gruppe der Leichtmetall bzw. deren Leichtmetalllegierungen zugeordnet sind, lassen sich unter Ausnutzung der Vorteile einer gießtechnischen Erzeugung mindestens des einen Abschnitts des Bauteils aus einem Leichtmetall oder seinen Legierungen Bauteile herstellen, die in ihren einzelnen exakt umrissenen Abschnitten ein Eigenschaftsspektrum aufweisen, das an die im betreffenden Abschnitt im praktischen Einsatz jeweils wirkenden Belastungen optimal angepasst ist.

Insbesondere eignen sich Aluminium-Werkstoffe für die Herstellung erfindungsgemäßer Zylinderköpfe. So hat die praktische Erprobung der Erfindung ergeben, dass sich der erste, eine höhere Belastbarkeit aufweisende Abschnitt besonders gut aus einer siliziumfreien, hochfesten Legierung des AlCu-Typs herstellen lässt, während der zweite, eine geringere Belastbarkeit aufweisende Abschnitt aus einer besser vergießbaren, eine komplexere Formgebung erlaubenden Legierung des AlSi-Typs gegossen werden kann.

Als Werkstoff für die Zwischenschicht eignet sich beispielsweise eine Legierung des AlZn-Typs. Für die Herstellung der mindestens zwei unterschiedlichen Abschnitte des Zylinderkopfs können AlCu- und AlSi-Legierungen verwendet werden. In diesem Fall sollte der Schmelztemperaturbereich der AlZn-Legierung unterhalb des Schmelztemperaturbereichs dieser Legierungen, jedoch oberhalb der üblichen Betriebstemperatur von Verbrennungsmotoren liegen, um eine dauerhaft sichere Anbindung der vorgegossenen Abschnitte des Zylinderkopfs zu garantieren.

Gerade bei Zylinderköpfen ermöglicht die Erfindung eine optimale Zuordnung der Eigenschaften der erfindungsgemäß vorgefertigten Abschnitte des Bauteils zu den im praktischen Einsatz auftretenden Belastungen. So ist bei einem erfindungsgemäßen Zylinderkopf-Bauteil der hoch belastbare erste Abschnitt der Brennraumseite des Zylinderkopfes zugeordnet sein, um die gerade bei modernen hoch aufgeladenen Diesel-Verbrennungsmotoren im Bereich des Brennraums auftretenden hohen mechanischen und thermischen Belastungen sicher aufzunehmen. Gleichzeitig kann der Abschnitt des Zylinderkopfes, der zur Ausbildung von Ein- und Auslasskanälen, von Öl- oder Kühlwasserleitungen, von Nockenwellenlagern etc. komplex geformt werden muss, durch eine besonders gut vergießbare Legierung hergestellt werden.

Um für die Erzeugung des ersten Abschnitts die Verwendung von hochfesten, jedoch schwer vergießbaren Legierungen, wie beispielsweise einer AlCu-Legierung sicher zu ermöglichen, ist es günstig, wenn der betreffende hoch belastbare Abschnitt eine einfache Formgebung aufweist. Zu diesem Zweck kann der erste Abschnitt als Platte ausgebildet sein, insbesondere eine quaderförmige Grundform aufweisen. Um dabei eine möglichst gute Anbindung der Abschnitte durch die Zwischenschicht zu gewährleisten, kann sich die mit der Zwischenschicht beschichtete Fläche des ersten Abschnitts im Wesentlichen parallel zu der Fläche des ersten Abschnitts erstrecken, die beispielsweise zum Anschluss an ein anderes Bauteil bestimmt ist.

Eine weitere, im Hinblick auf eine optimale und dauerhaft sichere Anbindung der Abschnitte des erfindungsgemäßen Bauteils gewährleistende Ausgestaltung der Erfindung sieht vor, dass jeder Abschnitt an einer Verbindungsfläche mit einer aus dem Zusatzwerkstoff gebildeten Beschichtung beschichtet wird und die mit der Beschichtung beschichteten Verbindungsflächen beim Fügen aneinander gesetzt werden, so dass die auf den Verbindungsflächen der Abschnitte vorhandenen Beschichtungen gemeinsam die Zwischenschicht bilden. Bei dieser Variante der Erfindung lässt sich die Beschichtung der Verbindungsflächen jeweils so ausführen, dass die betreffende Beschichtung optimal fest mit dem jeweiligen Abschnitt verbunden ist. Beim nach dem Zusammenfügen mindestens bis zum Erweichen des Werkstoffs der Zwischenschicht durchgeführten Erwärmen fließen dann die auf beiden Abschnitten vorhandenen Beschichtungen zusammen und bilden gemeinsam die Zwischenschicht.

Um die Bildung einer stoffschlüssigen Verbindung zwischen der Zwischenschicht und dem jeweils angeschlossenen Abschnitt zu vereinfachen, können die die Zwischenschicht bildende Schicht und/oder die ihr jeweils zugeordnete Fläche des jeweiligen Abschnitts vor dem Fügen oder unmittelbar vor der Erwärmung mit einem Flussmittel und / oder einem Zusatzwerkstoff beschichtet werden. Bei dem Zusatzwerkstoff kann es sich beispielsweise um einen Haftvermittler handeln, der die Entstehung einer stoffschlüssigen Verbindung zwischen den Fügepartnern unterstützt.

Eine Beeinträchtigung der Verbindung zwischen den Abschnitten durch eine unerwünschte Oxidation kann dadurch vermieden werden, dass die Erwärmung des aus den Abschnitten zusammengefügten Zylinderkopfs unter Vakuum oder unter einer Schutzgasatmosphäre erfolgt.

Ein weiterer Vorteil der Erfindung besteht darin, dass die Temperatur, auf die der Zylinderkopf nach dem Fügen zum Ausbilden der stoffschlüssigen Verbindung zwischen den Abschnitten des erfindungsgemäßen Zylinderkopfs erwärmt wird, einer Wärmebehandlungstemperatur entsprechen kann, bei der sich eine die mechanischen Eigenschaften verbessernde Gefügeänderung mindestens eines der Abschnitte einstellt. Auf diese Weise lässt sich durch Wahl einer entsprechenden Erwärmungstemperatur nicht nur die stoffschlüssige Verbindung der Abschnitte des Zylinderkopfs über die Zwischenschicht bewerkstelligen, sondern es kann auch die Ausprägung einer bestimmten, hinsichtlich der gewünschten Eigenschaften vorteilhaften Gefügestruktur der einzelnen Abschnitte bewirkt werden. Denkbar ist in diesem Zusammenhang auch, dass die Bereiche der Abschnitte, die im Zuge der Erwärmung nicht miterwärmt werden sollen, durch eine geeignete Kühlung gegen die in den Bereich der Zwischenschicht eingebrachte Wärme abgeschirmt werden.

Nachfolgend wird die Erfindung anhand einer ein Ausführungsbeispiel darstellenden Zeichnung näher erläutert. Es zeigen:

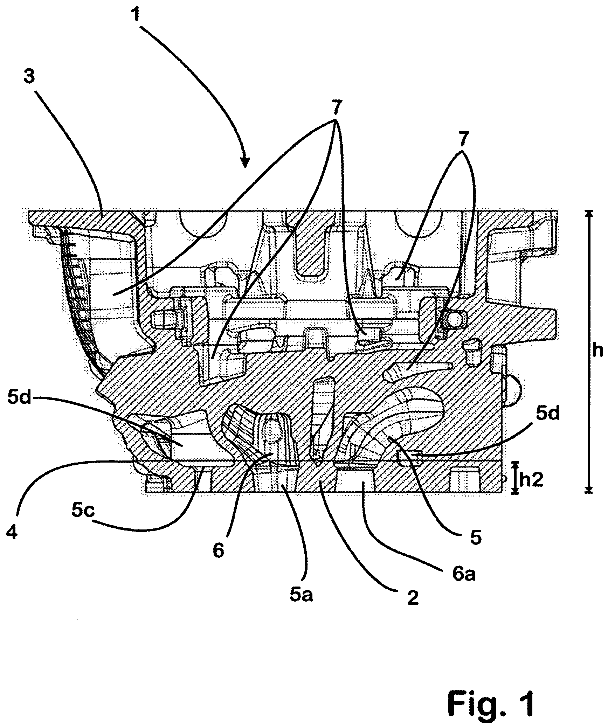

- Fig. 1: schematisch einen Querschnitt durch einen Zylinderkopf für einen Diesel-Verbrennungsmotor,

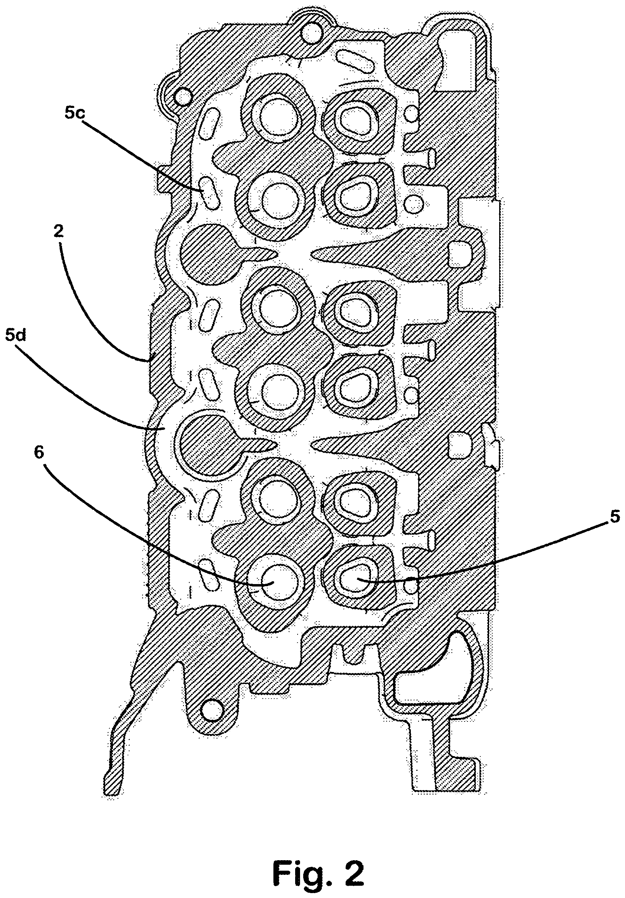

- Fig. 2: einen ersten Abschnitt des Zylinderkopfes in einer Draufsicht,
- Fig. 3: eine vergrößerte Schliffbilddarstellung einer in dem Zylinderkopf ausgebildeten Verbindungszone.

Der Zylinderkopf 1 für einen Diesel-Verbrennungsmotor ist aus zwei Abschnitten 2,3 zusammengesetzt, die über eine Zwischenschicht 4 stoffschlüssig miteinander verbunden sind.

Der den brennraumseitigen Abschluss des Zylinderkopfes 1 bildende Abschnitt 2 weist eine auf wenige Formelemente reduzierte, einfache Gestaltung auf und ist nach Art einer Platte mit einer im Wesentlichen rechtwinkligen Grundform ausgebildet. Die Dicke h2 des Abschnitts 2 entspricht dabei einem geringen Bruchteil der Gesamthöhe h des Zylinderkopfes 1. In den Abschnitt 2 sind einfach geformte Öffnungen, wie die in die Ventilsitze übergehenden Endabschnitte 5a,6a der Ein- und Auslasskanäle 5,6 der Zylinder des weiter nicht dargestellten Verbrennungsmotors eingeformt. In die konturierte, dem zweiten Abschnitt 3 zugeordnete Seite des ersten Abschnitts sind darüber hinaus ebenso einfach geformte Einsenkungen 5c eingeformt. Diese Einsenkungen 5c bilden gemeinsam mit korrespondierenden, in die dem ersten Abschnitt 2 zugeordnete Seite des zweiten Abschnitts 3 eingeformten, hier im Einzelnen nicht dargestellten Einsenkungen 5d und Öffnungen des zweiten Abschnitts 3 Ölversorgungs- und Kühlwasserkanäle des Zylinderkopfes 1.

Aufgrund seiner einfachen Formgebung kann der erste Abschnitt 2 problemlos aus einer an sich schwer vergießbaren, jedoch mechanisch hoch belastbaren, gemäß EN AC 21100 zusammengesetzten AlCu4-Legierung im T6-Zustand (T6-Zustand: Lösungsgeglüht bei 530 °C über 8 h, anschließend abgeschreckt in 80 °C warmen. Wasser und warmausgelagert bei 160 °C für 6 Stunden) erzeugt werden. Im Bereich seines ersten Abschnitts 2 weist der Zylinderkopf 1 so eine Streckgrenze Rp_{0,2} von mindestens 160 N/mm², eine Zugfestigkeit Rₘ von mindestens 195 N/mm² und eine Dehnung A von mindestens 15 % auf, so dass der erste Abschnitt 2 die im Bereich der Brennräume des Verbrennungsmotors im praktischen Einsatz auftretenden Belastungen sicher aufgenommen werden können.

Der unter Verwendung von einer Vielzahl von Formelementen 7, wie Zwischenwände, Kühlwasserräume und -leitungen, Ölleitungen, Anschlüsse für Öl- und Kühlwasserleitungen, wesentlich komplexer gestaltete, auf dem ersten Abschnitt sitzende zweite Abschnitt 3 des Zylinderkopfs 1 ist demgegenüber aus einer gemäß EN AC 46200 zusammengesetzten AlSi8Cu3-Legierung gegossen worden. Diese Gusslegierung besitzt eine wesentlich bessere Vergießbarkeit und ein dementsprechend gutes Formfüllungsvermögen, weist allerdings gegenüber der AlCu4T6-Legierung des ersten Abschnitts 2 eine deutlich niedrigere Festigkeit und ebenso niedrigere Dehnungswerte auf (Rp_{0,2}: min. 150 N/mm², Rₘ min.: 180 N/mm², A: min. 1 %). Aufgrund ihrer guten Vergießbarkeit lässt sich mit der für den zweiten Abschnitt 3 verwendeten Al-Legierung die komplexe Formgebung dieses Abschnitts 3 problemlos abbilden. Gleichzeitig reichen die mechanischen Eigenschaften dieser Legierung aus, um die im Bereich des zweiten Abschnitts 3 im praktischen Betrieb auftretenden Belastungen sicher aufnehmen zu können.

Für die Herstellung des Zylinderkopfes 1 werden die Abschnitte 2 und 3 in separaten Arbeitsgängen vorgefertigt und erforderlichenfalls so wärmebehandelt, dass sie ein für den jeweiligen Verwendungszweck optimales Gefüge aufweisen.

Anschließend wird auf die Verbindungsfläche des ersten Abschnitts 2, die der den nicht dargestellten Brennräumen zugeordneten Brennraumfläche gegenüberliegt, eine dünne Schicht aus einer AlZn-Legierung aufgebracht. Zur Verbesserung der Benetzbarkeit kann dabei ein Flussmittel auf die Verbindungsfläche aufgetragen werden oder das metallische Material der aufgetragenen AlZn-Schicht selbst ein Flussmittel enthalten. Ebenso kann erforderlichenfalls auf oder unter der AlZn-Schicht eine aus Zusatzwerkstoff bestehende Beschichtung vorgesehen sein, um die Anbindung der Abschnitte 2,3 zu verbessern.

Der Temperaturbereich von 350 - 500 °C, in dem die AlZn-Legierung schmilzt, liegt deutlich unterhalb des Temperaturbereichs, in dem die Al-Legierungen der beiden vorgegossenen Abschnitte 2, 3 schmelzen, jedoch ebenso deutlich oberhalb der typischen Betriebstemperatur, die beim Betrieb des Verbrennungsmotors, für den der Zylinderkopf 1 bestimmt ist, maximal erreicht wird.

Nach dem Auftrag der AlZn-Schicht wird der Zylinderkopf 1 zusammengefügt, indem der erste Abschnitt 2 mit seiner Verbindungsfläche auf die auf den zweiten Abschnitt 3 aufgetragene AlZn-Schicht 4 aufgesetzt wird.

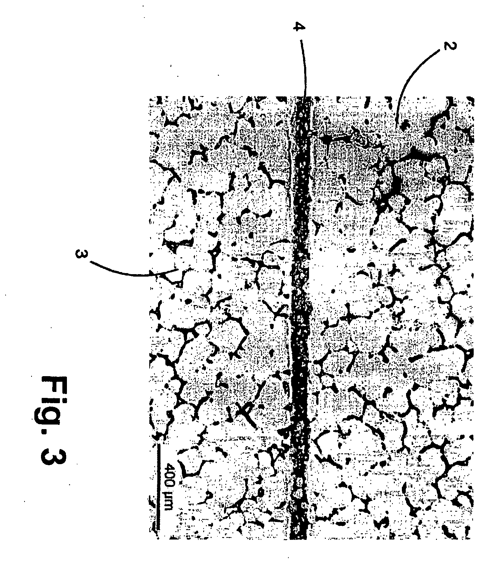

Daraufhin wird der Zylinderkopf 1 auf eine ca. 380 °C bis 500 °C betragende Erwärmungstemperatur erwärmt, bei der die AlZn-Schicht mindestens aufweicht bzw. schmilzt, so dass sich zwischen den Abschnitten 2,3 aus der AlZn-Schicht eine Zwischenschicht 4 bildet, über die die beiden Abschnitte 2,3 des Zylinderkopfes 1 nach Art einer Lötverbindung stoffschlüssig miteinander verbunden sind. Die Ausbildung der ca. 50 - 100 µm dicken Zwischenschicht 4 zwischen den Abschnitten 2 und 3 ist aus der in Fig. 3 wiedergegebenen vergrößerten Schliffbilddarstellung ersichtlich.

### BEZUGSZEICHEN

- 1: Zylinderkopf
- 2,3: Abschnitte des Zylinderkopfes 1 mit unterschiedlichen Materialeigenschaften
- 4: Zwischenschicht
- 5,6: Ein- und Auslasskanäle für die Zylinder des nicht dargestellten Verbrennungsmotors
- 5a,6a: Endabschnitte der Ein- und Auslasskanäle
- 5c,5d: Einsenkungen
- 7: weitere Formelemente

- h: Gesamthöhe des Zylinderkopfes 1
- h2: Dicke des Abschnitts 2

## Patentansprüche

1. Zylinderkopf für einen Verbrennungsmotor, der aus mindestens zwei Abschnitten (2,3) zusammengesetzt ist, von denen der den brennraumseitigen Abschluss des Zylinderkopfes (1) bildende erste Abschnitt (2) aus einem mechanisch und / oder thermisch hoch belastbaren metallischen Leichtmetallwerkstoff vorgegossen ist und von denen der zweite Abschnitt (3) aus einem weniger hoch belastbaren Leichtmetallgusswerkstoff vorgegossen ist, **dadurch gekennzeichnet, dass** die beiden Abschnitte (2, 3) über eine sich flächig zwischen den Abschnitten (2,3) erstreckende, ebenfalls aus einem metallischen Werkstoff bestehende metallische Zwischenschicht (4) stoffschlüssig miteinander verbunden sind, **dass** der erste, eine höhere Belastbarkeit aufweisende Abschnitt (2) aus einer siliziumfreien, hochfesten Legierung des AlCu-Typs gegossen ist, während der zweite, eine geringere Belastbarkeit aufweisende Abschnitt (3) aus einer Legierung des AlSi-Typs gegossen ist und **dass** der Werkstoff der metallischen Zwischenschicht (4) mit den Werkstoffen des ersten Abschnitts (2) und des zweiten Abschnitts (3) artverwandt ist.

2. Zylinderkopf nach einem der voranstehenden Ansprüche, **dadurch gekennzeichnet, dass** die metallische Zwischenschicht (4) bei einer Schmelztemperatur schmilzt, die höher als die Betriebstemperatur, für die das Bauteil (1) bestimmt ist, und niedriger als die Schmelztemperatur der Gusswerkstoffe ist, aus denen die beiden Abschnitte (2,3) des Bauteils (1) hergestellt sind.

3. Zylinderkopf nach einem der voranstehenden Ansprüche, **dadurch gekennzeichnet, dass** der erste Abschnitt (2) als Platte ausgebildet ist.

4. Zylinderkopf nach Anspruch 3, **dadurch gekennzeichnet, dass** der erste Abschnitt (2) eben ausgebildet ist.

5. Zylinderkopf nach Anspruch 3, **dadurch gekennzeichnet, dass** der erste Abschnitt (2) einen über seine Fläche variierten Dickenverlauf aufweist.

6. Zylinderkopf nach Anspruch 5, **dadurch gekennzeichnet, dass** in den ersten Abschnitt Einsenkungen und / oder Öffnungen (5a,5b) eingeformt sind.

7. Zylinderkopf nach einem der Ansprüche 3 bis 6, **dadurch gekennzeichnet, dass** der erste Abschnitt (2) eine quaderförmige Grundform aufweist.

8. Zylinderkopf nach einem der Ansprüche 3 bis 7, **dadurchgekennzeichnet, dass** sich eine freiliegende, zum Anschluss an einen Motorblock bestimmte Außenfläche des ersten Abschnitts (2) im Wesentlichen parallel zu der mit der Zwischenschicht (4) beschichteten Fläche des ersten Abschnitts (2) erstreckt.

9. Verfahren zum Herstellen eines Zylinderkopfes (1) mit mindestens zwei Abschnitten (2,3), von denen der eine Abschnitt (2) den brennraumseitigen Abschluss des Zylinderkopfes (1) bildet und mechanisch und / oder thermisch belastbarer ist als der andere Abschnitt (3), umfassend folgende Arbeitsschritte:
- Vorgießen des ersten Abschnitts (2) aus einer siliziumfreien, hochfesten Legierung des AlCu-Typs, die im verfestigten Zustand eine hohe mechanische und / oder thermische Belastbarkeit besitzt,
- separat vom Vorgießen des ersten Abschnitts (2) erfolgendes Gießen des zweiten Abschnitts (3) aus einer Legierung des AlSi-Typs, die im verfestigten Zustand eine mechanische und / oder thermische Belastbarkeit aufweist, die niedriger ist als die des Werkstoffs des ersten Abschnitts (2),
- Aufbringen einer aus einem metallischen Werkstoff bestehenden metallischen Schicht (4) auf eine Verbindungsfläche mindestens eines der Abschnitte (2,3), wobei die Schmelztemperatur des Werkstoffs dieser Schicht niedriger ist als die Schmelztemperatur der Gusswerkstoffe der Abschnitte (2,3) und der Werkstoff der metallischen Zwischenschicht (4) mit den Werkstoffen des ersten Abschnitts (2) und des zweiten Abschnitts (3) artverwandt ist,
- Zusammenfügen des ersten und des zweiten Abschnitts (2,3) zu dem Zylinderkopf (1) derart, dass sich die metallische Schicht flächig zwischen den einander zugeordneten Verbindungsflächen beider Abschnitte (2,3) erstreckt,
- Erwärmen des Zylinderkopfes (1) auf eine Temperatur, die höher ist als die Schmelztemperatur des Werkstoffs der metallischen Schicht, jedoch niedriger als die Schmelztemperatur der Gusswerkstoffe der Abschnitte (2,3), so dass die Schicht eine Zwischenschicht (4) bildet, über die die Abschnitte (2,3) unlösbar und stoffschlüssig miteinander verbunden sind.

10. Verfahren nach Anspruch 9, **dadurch gekennzeichnet, dass** die metallische Schicht ein Flussmittel enthält.

11. Verfahren nach einem der Ansprüche 9 oder 10, **dadurch gekennzeichnet, dass** die der metallischen Schicht jeweils zugeordnete Fläche des jeweiligen Abschnitts (2,3) vor dem Fügen der Abschnitte (2,3) mit einem Flussmittel und / oder einem Zusatzwerkstoff beschichtet wird.

12. Verfahren nach einem der Ansprüche 9 bis 11, **dadurch gekennzeichnet, dass** jeder Abschnitt (2,3) an einer Verbindungsfläche mit einer aus dem Werkstoff der metallischen Zwischenschicht (4) gebildeten Beschichtung beschichtet wird und **dass** die mit der Beschichtung beschichteten Verbindungsflächen beim Fügen aneinander gesetzt werden, so dass die auf den Verbindungsflächen der Abschnitte (2,3) vorhandenen Beschichtungen gemeinsam die Zwischenschicht (4) bilden.

13. Verfahren nach einem der Ansprüche 9 bis 12, **dadurch gekennzeichnet, dass** die Erwärmung des aus den Abschnitten (2,3) zusammengefügten Bauteils unter Vakuum oder unter einer Schutzgasatmosphäre erfolgt.

14. Verfahren nach einem der Ansprüche 9 bis 13, **dadurch gekennzeichnet, dass** die Temperatur, auf die das Bauteil (1) nach dem Fügen erwärmt wird, einer Wärmebehandlungstemperatur entspricht, bei der sich eine die mechanischen Eigenschaften verbessernde Gefügeänderung mindestens eines der Abschnitte (2,3) einstellt.

## Claims

1. Cylinder head for a combustion engine made out of at least two sections (2, 3) of which the first section (2) forming the combustion chamber-side end of the cylinder head (1) is precast from a mechanically and/or thermally highly loadable metallic light metal material and of which the second section (3) is precast from a less highly loadable light metal cast material, **characterised in that** the two sections (2, 3) are connected to each other in a materially-bonded manner via a metallic intermediate layer (4) extending flat between the sections (2, 3) and also consisting of a metallic material, **in that** the first section (2) having a higher loadability is cast from a silicone-free, high-strength alloy of the AlCu type, while the second section (3) having a lower loadability is cast from an alloy of the AlSi type and **in that** the material of the metallic intermediate layer (4) is related to the materials of the first section (2) and of the second section (3).

2. Cylinder head according to any one of the preceding claims, **characterised in that** the metallic intermediate layer (4) melts at a melting temperature which is higher than the operating temperature for which the component (1) is intended and lower than the melting temperature of the cast materials from which the two sections (2, 3) of the component (1) are manufactured.

3. Cylinder head according to any one of the preceding claims, **characterised in that** the first section (2) is configured as a plate.

4. Cylinder head according to Claim 3, **characterised in that** the first section (2) is configured flat.

5. Cylinder head according to Claim 3, **characterised in that** the first section (2) has a thickness profile that is varied over its surface.

6. Cylinder head according to Claim 5, **characterised in that** depressions and/or openings (5a, 5b) are formed into the first section.

7. Cylinder head according to any one of Claims 3 to 6, **characterised in that** the first section (2) has a square basic shape.

8. Cylinder head according to any one of Claims 3 to 7, **characterised in that** an exposed outer surface of the first section (2) intended to connect to a motor block extends substantially parallel to the surface of the first section (2) coated with the intermediate layer (4).

9. Method for manufacturing a cylinder head (1) with at least two sections (2, 3) of which one section (2) forms the combustion-chamber-side end of the cylinder head (1) and is mechanically and/or thermally loadable to a greater extent than the other section (3), comprising the following work steps:
- precasting the first section (2) from a silicone-free, high-strength alloy of the AlCu type which has a high mechanical and/or thermal loadability in the solidified state,
- casting the second section (3), which takes place separately from the casting of the first section (2), from an alloy of the AlSi type which has a mechanical and/or thermal loadability in the solidified state which is lower than that of the material of the first section (2),
- applying a metallic layer (4) consisting of a metallic material on a connection surface of at least one of the sections (2, 3) wherein the melting temperature of the material of this layer is lower than the melting temperature of the cast materials of the sections (2, 3) and the material of the metallic intermediate layer (4) is related to the materials of the first section (2) and of the second section (3),
- joining the first and the second section (2, 3) to the cylinder head (1) such that the metallic layer extends flat between the connection surfaces of both sections (2, 3) assigned to each other,
- heating the cylinder head (1) to a temperature which is higher than the melting temperature of the material of the metallic layer, but lower than the melting temperature of the cast materials of the sections (2, 3) such that the layer forms an intermediate layer (4) via which the sections (2, 3) are connected to each other in a non-detachable and materially-bonded manner.

10. Method according to Claim 9, **characterised in that** the metallic layer contains a flux.

11. Method according to any one of Claims 9 or 10, **characterised in that** the surface of the respective section (2, 3) respectively assigned to the metallic layer is coated with a flux and/or a filler material prior to joining the sections (2, 3).

12. Method according to any one of Claims 9 to 11, **characterised in that** each section (2, 3) is coated on a connection surface with a coating formed from the material of the metallic intermediate layer (4) and **in that** the connection surfaces coated with the coating are placed together upon joining such that the coatings present on the connection surfaces of the sections (2, 3) together form the intermediate layer (4).

13. Method according to any one of Claims 9 to 12, **characterised in that** the heating of the component assembled from the sections (2, 3) takes place in a vacuum or in an inert gas atmosphere.

14. Method according to any one of Claims 9 to 13, **characterised in that** the temperature to which the component (1) is heated after joining corresponds to a heat treatment temperature at which a structural change of at least one of the sections (2, 3) arises which improves the mechanical properties.

## Revendications

1. Tête de cylindre pour un moteur à combustion interne, constituée d'au moins deux parties (2, 3), dont la première partie (2), formant la fermeture de la tête de cylindre (1) du côté de la chambre de combustion, est coulée au préalable à partir d'une matière métallique de métal léger à haute résistance thermique et/ou mécanique et dont la deuxième partie (3) est coulée au préalable à partir d'une matière de métal léger de résistance inférieure, **caractérisée en ce que** les deux parties (2, 3) sont jointes mutuellement par liaison de matière, par une couche métallique intermédiaire (4) s'étendant dans le plan situé entre les deux parties (2, 3), et constituée, elle aussi, d'une matière métallique (4), et **en ce que** la première partie (2), présentant une résistance plus élevée, est coulée à partir d'un alliage à haute rigidité, exempt de silicium et du type AlCu, tandis que la deuxième partie (3), présentant une plus faible résistance, est coulée à partir d'un alliage du type AISi et **en ce que** la matière de la couche métallique intermédiaire (4) est apparentée, par sa nature, aux matières de la première partie (2) et de la deuxième partie (3).

2. Tête de cylindre selon l'une quelconque des revendications précédentes, **caractérisée en ce que** la couche intermédiaire métallique (4) fond à une température de fusion supérieure à la température à laquelle doit fonctionner l'élément constructif (1), et inférieure à la température de fusion des matières de coulée à partir desquelles sont produites les deux parties (2, 3) de l'élément constructif (1).

3. Tête de cylindre selon l'une quelconque des revendications précédentes, **caractérisée en ce que** la première partie (2) est réalisée sous la forme d'une plaque.

4. Tête de cylindre selon la revendication 3, **caractérisée en ce que** la première partie (2) est réalisée de façon plane.

5. Tête de cylindre selon la revendication 3, **caractérisée en ce que** la première partie (2) présente une épaisseur variable sur l'ensemble de sa surface.

6. Tête de cylindre selon la revendication 5, **caractérisée en ce que**, dans la première partie, sont formés par moulage des dépressions et/ou des orifices (5a, 5b).

7. Tête de cylindre selon l'une quelconque des revendications de 3 à 6, **caractérisée en ce que** la forme de départ de la première partie (2) est parallélépipédique.

8. Tête de cylindre selon l'une quelconque des revendications de 3 à 7, **caractérisée en ce qu'**une face externe, découverte, de la première partie (2), destinée à effectuer le raccordement à un bloc-moteur, s'étend essentiellement de façon parallèle à la surface enduite de la couche intermédiaire (4) de la première partie (2).

9. Procédé de fabrication d'une tête de cylindre (1) constituée d'au moins deux parties (2, 3), dont une partie (2), qui forme la fermeture de la tête de cylindre (1) du côté de la chambre de combustion, possède une résistance thermique et/ou mécanique plus grande que celle de l'autre partie (3), comportant les étapes de travail suivantes :
- coulage préalable de la première partie (2) à partir d'un alliage de haute rigidité, exempt de silicium et du type AlCu qui, à l'état solidifié, possède une haute résistance thermique et/ou mécanique,
- en une étape distincte du coulage préalable de la première partie (2), a lieu le coulage de la deuxième partie (3), à partir d'un alliage de type AISi qui présente, à l'état solidifié, une résistance thermique et/ou mécanique inférieure à celle de la matière de la première partie (2),
- application d'une couche métallique (4) constituée d'une matière métallique sur une surface de jonction d'au moins une des parties (2, 3), étant entendu que la température de fusion de la matière de cette couche est inférieure à la température de fusion des matières de fonte des parties (2, 3) et que la matière de la couche intermédiaire (4) est d'une nature apparentée à celle des matières de la première partie (2) et de la deuxième partie (3).,
- assemblage de la première et de la deuxième partie (2, 3) en une tête de cylindre (1) de sorte que la couche métallique s'étende sur l'ensemble de la surface comprise entre les surfaces de jonction se faisant mutuellement face des deux parties (2, 3),
- réchauffement de la tête de cylindre (1) jusqu'à une température supérieure à la température de fusion de la matière de la couche métallique, mais inférieure à la température de fusion des matières de fonte des parties (2, 3), de sorte que ladite couche se transforme en une couche intermédiaire (4), par laquelle s'établit une liaison indissociable et de matière entre les parties (2, 3).

10. Procédé selon la revendication 9, **caractérisé en ce que** la couche métallique contient un fondant.

11. Procédé selon la revendication 9 ou 10, **caractérisé en ce qu'**avant la jonction des parties (2, 3), la surface de chaque partie (2, 3) tournée vers la couche métallique est enduite d'un fondant et/ou d'un additif complémentaire.

12. Procédé selon l'une quelconque des revendications de 9 à 11, **caractérisé en ce que** chaque partie (2, 3) est enduite, sur une surface de jonction, d'un revêtement élaboré avec de la matière de la couche intermédiaire (4) métallique et **en ce que** les surfaces de jonction enduites du revêtement sont aboutées l'une à l'autre lors du montage de sorte que les revêtements présents sur les surfaces de jonction des parties (2, 3) forment conjointement la couche intermédiaire (4).

13. Procédé selon l'une quelconque des revendications de 9 à 12, **caractérisé en ce que** le chauffage de l'élément constructif assemblé à partir des pièces (2, 3) a lieu sous vide ou dans une atmosphère inerte.

14. Procédé selon l'une quelconque des revendications de 9 à 13, **caractérisé en ce que** la température à laquelle l'élément constructif (1) est chauffé après le montage correspond à une température de traitement thermique à laquelle se produit une modification de la microstructure améliorant les propriétés mécaniques d'au moins une des parties (2, 3).
